# EUROPÄISCHE PATENTANMELDUNG

(11) **EP 3 524 048 A2**
(43) Veröffentlichungstag der Anmeldung: **14.08.2019**
(21) Anmeldenummer: 18210594.0
(22) Anmeldetag: 05.12.2018
(51) Int. Cl.: A01G 9/02, A01G 13/02

(54) **PFLANZENGEFÄSS**

(30) Priorität: 07.02.2018 CH 1402018
(71) Anmelder: Simmen, Christa, 8630 Rüti (CH)
(72) Erfinder: Simmen, Christa, 8630 Rüti (CH)
(74) Vertreter: Stump, Beat

(57) **Zusammenfassung**

Das erfindungsgemässe Pflanzengefäss (10,20,30,40) weist Mittel zur Bewahrung einer gegenüber der Umgebungstemperatur höheren Temperatur des Erdreichs einer im Gefäss (10,20,30,40) eingepflanzten Pflanze auf. Dies wird durch eine Isolationsschicht (5), die auch in einem Hohlraum (32) des Gefässes angeordnet werden kann, oder durch eine Heizung (35), die in das Innere des Gefässes (10,20,30,40) wirkt.

## Beschreibung

Die vorliegende Erfindung betrifft ein Pflanzengefäss gemäss dem Oberbegriff von Anspruch 1.

Pflanzengefässe, insbesondere für Pflanzen, die draussen oder auch in nicht oder wenig beheizten Räumen stehen sollen sind bekannt, wobei deren Grösse variiert, beispielsweise von einem kleinen Zitronenbaum bis hin zur grossen Palme oder einem Oleanderstrauch. Viele dieser gerne im Aussenbereich (oder nicht geheizten Bereich) angeordneten Pflanzen sind jedoch nicht Wintertauglich und nehmen in der kalten Zeit Schaden. Es ist manchmal möglich, im Frühling erfrorene Äste zurück zu schneiden, erfrorene Wurzeln hingegen führen häufig dazu, dass die Pflanze ersetzt werden muss, sei dies, weil sie ganz oder auch nur teilweise abstirbt, so dass ihr Aussehen nicht mehr genügt.

Oft werden kälteempfindliche Pflanzen an einem geschützten Ort überwintert, steht der Raum dafür nicht zur Verfügung oder kann der Topf beispielsweise wegen der Grösse der Pflanze und dem damit verbundenen Gewicht nicht transportiert werden, bleibt nur übrig, auf kälteempfindliche Pflanzen zu verzichten oder zu riskieren, dass diese erfrieren.

Dies trifft insbesondere auf Pflanzen zu, die freistehend auf einem Balkon oder einer Terrasse angeordnet sind, wobei deren Topf der Witterung ausgesetzt ist. In kalten klaren Nächten kann die Temperatur so stark fallen, dass ein bereits unterkühlter Wurzelballen nicht mehr heilbare Frostschäden davon trägt.

Entsprechend ist es die Aufgabe der vorliegenden Erfindung, ein Pflanzengefäss bereit zu stellen, der ermöglicht, Pflanzen in für sie zu kalter Umgebung zu halten, und der insbesondere die Wurzeln vor kritischen Frostschäden, welche das Überleben der Pflanze bedrohen oder deren Aussehen über die nächste Wachstumsperiode dauerhaft vermindern, bewahrt.

Diese Aufgabe wird durch ein Pflanzengefäss gemäss den kennzeichnenden Merkmalen von Anspruch 1 gelöst.

Dadurch, dass das Erdreich einer eingepflanzten Pflanze auf einer gegenüber der Umgebungstemperatur höheren Temperatur gehalten werden kann, ist es möglich, diese höhere Temperatur derart vorzusehen, dass insbesondere die Wurzeln ohne Frostschäden bleiben. Dadurch ist es nicht mehr notwendig, die Pflanzen in eine geschützte Umgebung zu bringen, sie können an einem Ort verbleiben, der sonst zum Erfrieren der Pflanze, bzw. deren Wurzeln, führen würde.

Weitere bevorzugte Ausführungsformen des erfindungsgemässen Pflanzengefässes weisen die Merkmale der abhängigen Ansprüche auf.

Die Erfindung wird nachstehend anhand der Figuren noch etwas näher beschrieben.

Es zeigt:
Figur 1 schematisch einen erfindungsgemässes Pflanzengefäss im Querschnitt, der eine Isolationsschicht aufweist,
Figur 2 schematisch eine Ausführungsform des Pflanzengefässes, das doppelwandig ausgebildet ist,
Figur 3 schematisch eine weitere Ausführungsform des Pflanzengefässes,
Figur 4 schematisch eine weitere Ausführungsform des Pflanzengefässes mit einer Heizung, und
Figur 5 schematisch eine Manschette für ein erfindungsgemässes Pflanzengefäss.

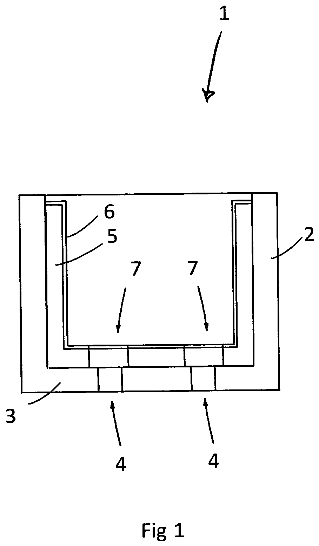

Figur 1 zeigt ein erfindungsgemässes Pflanzengefäss 1 in einem Querschnitt, mit zur Entlastung der Figur weggelassener Pflanze. Generell, für alle erfindungsgemässen Ausführungsformen, können solche Töpfe unterschiedliche Masse aufweisen, von beispielsweise 20 cm Durchmesser bis zu 1 m Durchmesser oder mehr, wobei die Höhe in gleichem Mass variieren kann. Eingepflanzt werden könne kleinere Pflanzen, Sträucher, Palmen oder Bäume irgendwelcher Art. Ebenso kann der Topf aus irgendeinem Material bestehen, sei dies Terracotta, Stein, Faserzement oder sogar, erfindungsgemäss, ein Metall oder ein anderes Material mit hoher Wärmeleitfähigkeit.

Das Pflanzengefäss 1 besitzt eine umlaufende Seitenwand oder Schale 2, aus einem der oben erwähnten Materialien, und einen Boden 3, der bevorzugt mit Löchern 4 versehen ist, damit Wasser aus dem Gefäss abfliessen kann. Die Seitenwand oder Schale 2 kann beliebige Konfiguration aufweisen, also beispielsweise rund oder eckig, auch langestreckt ausgebildet sein.

An der inneren Seite der Seitenwand oder Schale 2 ist eine wärmeisolierende Schicht 5 vorgesehen, welche in der gezeigten Ausführungsform mit einer Abdeckung 6 versehen ist und analog zu den Öffnungen 4 im Boden 3 Öffnungen 7 aufweist, die den Wasserabfluss ermöglichen. In der Regel wird diese Schicht 5 dazu dienen, im Inneren des Gefässes 1, d.h. im Erdreich der eingepflanzten Pflanze, eine Temperatur etwas über 0 °C, vielleicht bei 2 °C oder 3 °C zu halten, wenn die Umgebungstemperatur unter 0 °C sinkt, d.h. die Gefahr besteht, dass die Wurzeln erfrieren.

Die wärmeisolierende Schicht 5 verstärkt die grundsätzlich (je nach Material) ebenfalls etwas wärmeisolierende Eigenschaft der Seitenwand 2 auf jeden Fall soweit, dass eine Pflanze, die einen Kälteeinbruch in einem nicht erfindungsgemäss isolierten Gefäss wohl nicht überstehen würde, diesen nun mit grosser Wahrscheinlichkeit übersteht.

Dadurch entfällt die Notwendigkeit, das Pflanzengefäss in eine geschützte Umgebung zu transportieren, wenn Kälte und Frost drohen. Dies ist insbesondere von Vorteil, wenn das Gefäss mit der Pflanze ein Gewicht aufweist, das sich nicht mehr einfach heben und tragen lässt, ist aber auch dann vorteilhaft, wenn es tragbar ist, jedoch eine geschützte Umgebung fehlt.

Die wärmeisolierende Schicht 5 kann beispielsweise Gummi oder organische, geschäumte Kunststoffe aufweisen. Die Abdeckung 6 kann verschiedenen Zwecken dienen, sei dies der optischen Verkleidung der Schicht 5, oder deren (mechanischer) Schutz. Sie kann auch das im Topf befindende Erdreich vor dem Material der Schicht 5 schützen, wenn dieses als solches nicht geeignet ist, mit Pflanzenerde in Berührung zu kommen. Entsprechend kann, je nach der Ausbildung der Schicht 5, die Abdeckung 6 weggelassen werden oder nicht.

Es ergibt sich, dass das erfindungsgemässe Pflanzengefäss mit Mitteln zur Bewahrung einer gegenüber der Umgebungstemperatur höheren Temperatur des Erdreichs einer im Gefäss eingepflanzten Pflanze versehen ist. Bevorzugt weisen die Mittel zur Bewahrung einer höheren Temperatur eine am Gefäss angeordnete Isolationsschicht auf, die besonders bevorzugt die gesamte Seitenwand des Gefässes und ganz besonders bevorzugt auch dessen Boden bedeckt.

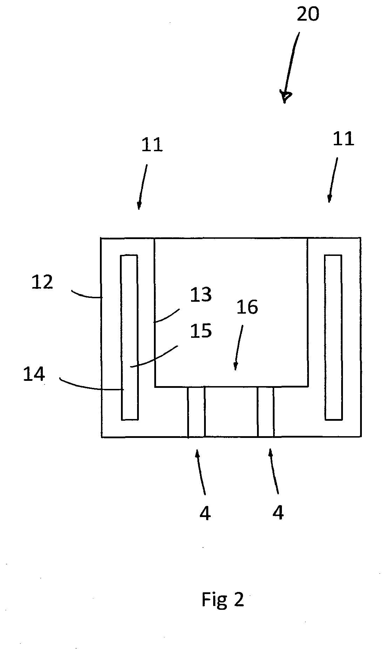

Figur 2 zeigt eine weitere Ausführungsform eines erfindungsgemässen Pflanzengefässes 10, dessen Seitenwand oder Schale 11 doppelwandig ausgebildet ist, mit einer äusseren Wand 12 und einer inneren Wand 13, welche zwischen sich einen Raum 14 ausbilden. Im Raum 14 befindet sich ein wärmeisolierendes Material 15, welches die Funktion der wärmeisolierenden Schicht 5 in der Ausführungsform gemäss Figur 1 besitzt.

Bevorzugt weist das wärmeisolierende Material 15 einen organischen Schaumstoff wie Polystyrol-, Polyurethan oder Polyethylen-Schaum oder anorganische Faserstoffe wie etwa Steinwolle, oder auch Glaswolle auf mit besonders bevorzugt einer Wärmeleitfähigkeit λ < 0,04 W/mK, ganz bevorzugt λ < 0,06 W/mK auf. Im konkreten Fall kann der Fachmann leicht ein geeignetes Isolationsmaterial bestimmen und die Räume 14 entsprechend ausschäumen. Der Fachmann kann hier leicht nach der Grösse des Pflanzengefässes die Art des wärmeisolierenden Materials (zur Verfügung stehende Breite der isolierenden Schicht, Kosten etc) bestimmen.

Natürlich kann umlaufend über die gesamte Seitenwand oder Schale 11 ein einziger Raum 14 vorgesehen werden, oder dieser wird beispielsweise wegen der Festigkeit des Gefässes 10 in einzelne, zur Entlastung der Figur nicht näher dargestellte Raumabschnitte unterteilt. Weiter weist der Boden 16 des Gefässes 10 bevorzugt Öffnungen 17 für den Abfluss von Wasser auf.

Es ergibt sich eine Ausführungsform des erfindungsgemässen Pflanzengefässes, bei welchem eine Seitenwand und/oder ein Boden des Gefässes wenigstens teilweise doppelwandig ausgebildet ist, und die Mittel zur Bewahrung einer höheren Temperatur in einem durch die doppelte Wand ausgebildeten Raum angeordnet sind. Bevorzugt weisen diese Mittel als zur Bewahrung einer höheren Temperatur eine in dem durch die doppelte Wand ausgebildeten Raum angeordneten Isolationsschicht auf. Natürlich kann über die Darstellung in Figur 2 hinaus auch der Boden 16 des Gefässes 10 doppelwandig ausgebildet und mit einer Isolationsschicht versehen sein. Diese Ausführungsform ist insbesondere im Hinblick auf die optischen Eigenschaften vorteilhaft, und weiter dadurch, dass die Isolationsschicht weder mit der Aussenwelt noch mit der Pflanzenerde in Berührung kommen kann.

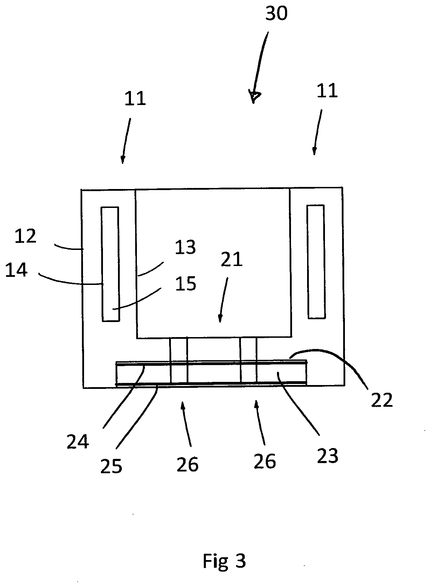

Figur 3 zeigt ein erfindungsgemässes Pflanzengefäss 20, dessen Seitenwände gemäss der in der Figur 2 dargestellten Ausführungsform ausgebildet sind, wobei jedoch der Boden 21 eine Ausnehmung 22 Aufweist, in welche eine wärmeisolierende Schicht 23 (bevorzugt mit Abdeckungen 24,25) eingesetzt ist. Wiederum sind Öffnungen 25 für den Abfluss von Wasser vorteilhaft, aber natürlich nicht zwingend. Diese Ausführungsform ist für eine einfache Herstellung des Gefässes 20 vorteilhaft. An dieser Stelle sei angemerkt, dass bei einer doppelwandigen Konstruktion auch ein Aussengefäss (mit den äusseren Wänden 12) mit einem Innengefäss (Innenwände 13) geeignet zusammengesetzt werden kann, so dass sich die gewünschte Konfiguration mit dem Raum (oder den Raumbereichen) 14 ausbildet.

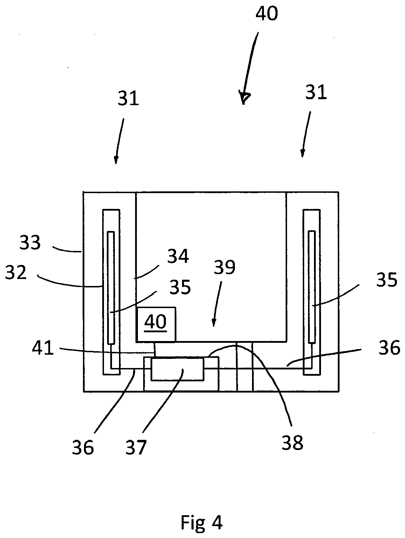

Figur 4 zeigt ein erfindungsgemässes Pflanzengefäss 30, dessen Seitenwände 31 gemäss der in der Figur 2 dargestellten Ausführungsform ausgebildet sind, d.h. einen Hohlraum 32 aufweisen, der gebildet ist durch eine äussere Seitenwand 33 und eine innere Seitenwand 34. Im Hohlraum 34 sind als elektrische Heizung 35 ausgebildete Mittel zur Bewahrung gegenüber der Umgebungstemperatur einer höheren Temperatur vorgesehen, welche bevorzugt über ein Kabel 36 von einem Steuergerät 37 gespiesen werden, welches seinerseits in einer Ausnehmung 38 des Bodens 39 des Gefässes 30 angeordnet ist. Eine von aussen zum Steuergerät 37 führende Stromleitung, welche das Steuergerät 37 mit Strom versorgt, ist zur Entlastung der Figur weggelassen. Weiter ist bevorzugt ein Thermometer 40 mit dem Steuergerät über eine geeignete Leitung 41 verbunden, so dass die Heizung 35 nach Bedarf eingeschaltet oder geregelt werden kann. Diese Ausführungsform erlaubt insbesondere, bei sehr tiefen Aussentemperaturen, oder bei länger andauernden Kälteperioden, das im Gefäss 30 sich befindende Erdreich auf einer Temperatur zu halten, bei welcher die Wurzeln nicht geschädigt werden.

Es ergibt sich, dass bevorzugt die Mittel zur Bewahrung einer höheren Temperatur ausgebildet sind, Wärme zu produzieren, bevorzugt als elektrische Heizung ausgebildet sind, die besonders bevorzugt über einen Thermostat ansteuerbar ist. Bevorzugt ist dabei der Thermostat im Inneren des Gefässes angeordnet, kann aber auch, ausserhalb des Gefässes 30 angeordnet, die Aussentemperatur detektieren.

Die Merkmale gemäss den verschiedenen, in den Figuren 1 bis 4 dargestellten Ausführungsformen können grundsätzlich nach Bedarf mit einander kombiniert werden. So ist es beispielsweise denkbar, dass bei der Ausführungsform nach Figur 4 im Hohlraum 32 noch eine Isolationsschicht vorgesehen wird, welche zwischen der äusseren Wand 33 und der Heizung 35 angeordnet wird, so dass die Heizleistung an sich sehr tief gehalten werden kann und beispielsweise eine Batterieversorgung der Heizung 35 erleichtert wird.

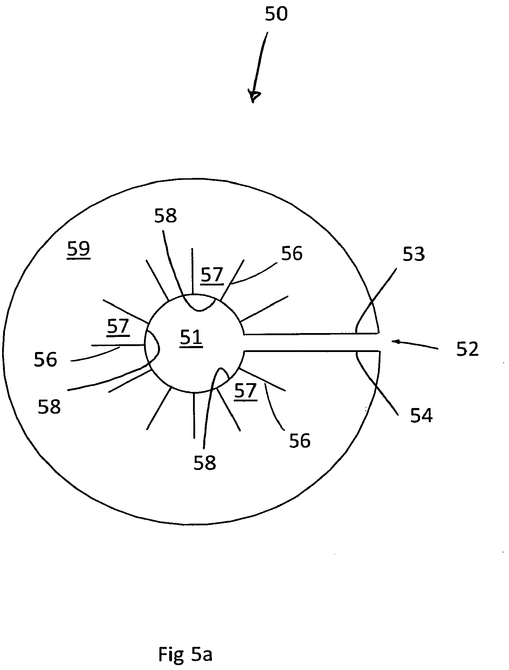

Figur 5a zeigt eine Ansicht von oben auf eine flächig ausgebildete, wärmeisolierenden Manschette 50 aus einem Material wie beispielsweise Gummi oder Kunststoff mit einer schlechteren Wärmeleitung als Metall, bevorzugt mit einer Wärmeleitfähigkeit λ < 0,04 W/mK oder tiefer. Die Manschette 50 weist eine Abdeckfläche 59 für das Erdreich eines Pflanzengefässes und eine Öffnung 51 auf, so dass sie den Stamm einer Pflanze mit der Öffnung 51 umschliessen und gleichzeitig mit der Unterseite der Abdeckfläche 59 auf dem in einem Pflanzengefäss vorhandenen Erdreich aufliegen kann, womit dieses gegenüber der Umwelt weitgehend abgedeckt ist und entsprechend keine Wärme verliert. Bevorzugt, aber nicht zwingend, ist die Manschette 50 von der Öffnung 51 her mit Einschnitten 56 versehen, so dass sich Abschnitte 57 bilden, deren Enden 58 nach oben gebogen an einem Stamm einer Pflanze anliegen können, wenn dieser dicker ist als die Öffnung 55 oder dieser gegenüber verschoben liegt. Weiter ist bevorzugt die obere Seite der Abdeckfläche 59 schwarz, so dass darauf fallende Sonnenstrahlung eine möglichst grosse Erwärmung der Manschette 50 bewirkt - trotz der gewollten Isolation kann so der kleine, aber an sich trotz Isolation unvermeidliche Wärmetransfer den Wärmehaushalt des Wurzelballens günstig beeinflussen.

Bevorzugt besteht die Manschette 50 aus einem flexiblen Material, welches erlaubt, ihn zu verwinden, so dass die Manschette 50 mit einem dann entsprechend geöffneten Spalt 52, gebildet durch die Ränder 53,54 der Manschette 50, um den Stamm einer Pflanze gefahren werden kann, bis sich der Stamm in der inneren Öffnung 55 der Manschette 50 befindet und die Manschette 50 damit auf dem Erdreich im Pflanzengefäss abgelegt werden kann. Dadurch wird ein exzessiver Wärmeverlust der Pflanzenerde durch deren freie Oberfläche vermieden.

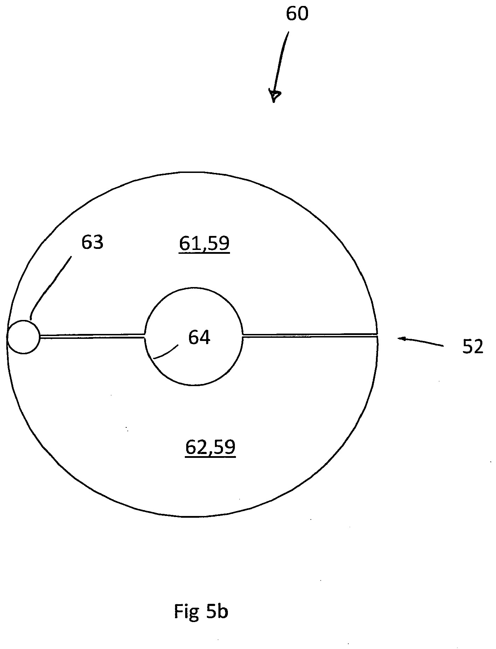

Figur 5b zeigt eine alternative Ausführungsform einer Manschette 60, die aus zwei Hälften 61,62 besteht, die über eine als Scharnier 63 ausgebildete Verschwenkverbindung voneinander weggedreht werden können, so dass die Manschette 60 um den Stamm einer Pflanze herum gefahren werden kann, der im geschlossenen Zustand der Hälften 61,62 von der inneren Öffnung 64 der Manschette 60 aufgenommen werden kann. Dies erlaubt, eventuell wenig flexible, aber über Jahre verwendbare, gleichzeitig günstige Materialien für die Manschette 60 vorzusehen, wobei je nach dem (wie auch bei der Ausführungsform nach Figur 5a) noch zusätzlich bevorzugt an der Unterseite der Manschette 50,60, eine Isolationsschicht, beispielsweise als aufgeschäumte Schicht oder in Form einer zugeschnittenen, geschäumten Kunststoffplatte vorgesehen werden kann. Dann besitzt die Manschette 60 - oder auch die Manschette 50 - einen Trägerkörper und eine an diesem angeordnete wäremeisolierende Schicht.

Als wärmeisolierendes Material kann beispielsweise Gummi vorgesehen werden, im Fall einer zusätzlichen wärmeisolierenden Schicht beispielsweise einer der oben genannten organischen Schaumstoffe oder ein anderes, geeignetes isolierendes Material.

Es ergibt sich ein Pflanzengefäss nach Anspruch 1, wobei die Mittel zur Bewahrung einer gegenüber der Umwelt höheren Temperatur eine wärmeisolierenden, flächigen Manschette aufweisen, der über dem Erdreich einer eingepflanzten Pflanze angeordnet werden kann, derart, dass die Manschette dieses im Wesentlichen abdeckt, wobei die Manschette ausgebildet ist, über dem Erdreich liegend einen Stamm der Pflanze zu umschliessen, und bevorzugt eine Isolationsschicht aufweist.

Es sei angemerkt, dass natürlich die Aussenkontur der Manschette dem Umriss des Pflanzengefässes folgt, welcher verschiedenartig ausgebildet werden kann, s. dazu oben. Ebenso sollen unter den Begriff "Stamm" einer Pflanze auch Stängel oder Stiele (von kleineren Pflanzen) bzw. eine Anzahl davon, je nach der Bepflanzung des Pflanzengefässes, fallen.

Weiter ergibt sich, dass erfindungsgemäss die Manschette wenigstens teilweise beweglich ausgebildet ist, bevorzugt flexibel ausgebildet ist und/oder ein Scharnier aufweist, derart, dass sie von einer geschlossenen Betriebsstellung in eine geöffnete Lage bringbar ist, in welcher die Manschette um den Stamm der Pflanze gelegt werden kann.

Erfindungsgemäss ist damit eine Manschette für ein Pflanzengefäss mit einer inneren Öffnung 51,64 zur umschliessenden Aufnahme des Stamms einer Pflanze, die im Pflanzengefäss eingepflanzt ist, und mit einer flächigen, rund um die Öffnung 51,64 herumverlaufenden, wärmeisolierenden Abdeckfläche 59 für das Erdreich der in das Pflanzengefäss eingepflanzten Pflanze, wobei die Manschette 50, 60 einen von der Öffnung 51,64 sich radial nach aussen durch die Abdeckfläche hindurch erstreckenden Spalt 52 für das Einfahren des Stammes in die Öffnung 51,54 aufweist.

Bevorzugt ist die Wärmeleitfähigkeit λ der Abdeckfläche 59 kleiner als 0,04 W/mK oder noch tiefer. Weiter bevorzugt ist die Abdeckfläche 59 flexibel ausgebildet. Weiter bevorzugt weist die Abdeckfläche 59 der Manschette 50,60 einen Trägerkörper und eine wärmeisolierende Schicht auf.

## Patentansprüche

1. Pflanzengefäss, **dadurch gekennzeichnet, dass** das Gefäss (1,20,30,40) mit Mitteln zur Bewahrung einer gegenüber der Umgebungstemperatur höheren Temperatur des Erdreichs einer im Gefäss (1,20,30,40) eingepflanzten Pflanze versehen ist.

2. Pflanzengefäss nach Anspruch 1, wobei eine Seitenwand (11,31) und/oder ein Boden (21,39) des Gefässes (20,30,40) wenigstens teilweise doppelwandig ausgebildet ist und die Mittel zur Bewahrung einer höheren Temperatur in einem durch die doppelte Wand ausgebildeten Raum (14,32) angeordnet sind.

3. Pflanzengefäss nach Anspruch 1, wobei die Mittel zur Bewahrung einer höheren Temperatur eine am Gefäss (1,20,30,40) angeordnete Isolationsschicht (5,15,23) aufweisen, die bevorzugt die gesamte Seitenwand (1,20,30,40) des Gefässes und besonders bevorzugt auch dessen Boden (3,16,31) bedeckt.

4. Pflanzengefäss nach Anspruch 2, wobei die Mittel zur Bewahrung einer höheren Temperatur eine in dem durch die doppelte Wand (11) ausgebildeten Raum (14) angeordneten Isolationsschicht (15) aufweisen.

5. Pflanzengefäss nach Anspruch 1, wobei die Mittel zur Bewahrung einer höheren Temperatur ausgebildet sind, Wärme zu produzieren, bevorzugt als elektrische Heizung (35) ausgebildet sind, die besonders bevorzugt über einen Thermostat (40) ansteuerbar ist.

6. Pflanzengefäss nach Anspruch 5, wobei der Thermostat (42) im Inneren des Gefässes (40) angeordnet ist.

7. Pflanzengefäss nach Anspruch 1, wobei die Mittel zur Bewahrung einer höheren Temperatur eine wärmeisolierende, flächigen Manschette (50,60) aufweisen, die über dem Erdreich einer eingepflanzten Pflanze angeordnet werden kann, derart, dass sie dieses im Wesentlichen abdeckt, wobei die Manschette (50,60) ausgebildet ist, über dem Erdreich liegend einen Stamm der Pflanze zu umschliessen, und eine Isolationsschicht aufweist.

8. Pflanzengefäss nach Anspruch 3 oder 4 oder 8, wobei die Isolationsschicht Gummi und/oder einen geschäumten Kunststoff aufweist.

9. Pflanzengefäss nach Anspruch 9, wobei die Manschette (50,60) wenigstens teilweise beweglich ausgebildet ist, bevorzugt flexibel ausgebildet ist oder ein Scharnier (63) aufweist, derart, dass sie von einer geschlossenen Betriebsstellung in eine geöffnete Lage bringbar ist, in welcher der Manschette um den Stamm der Pflanze gelegt werden kann.

10. Manschette für ein Pflanzengefäss, **gekennzeichnet durch** eine innere Öffnung (51,64) zur umschliessenden Aufnahme des Stamms einer Pflanze, die im Pflanzengefäss eingepflanzt ist, und mit einer flächigen, rund um die Öffnung (51,64) herumverlaufenden, wärmeisolierenden Abdeckfläche für das Erdreich der in das Pflanzengefäss eingepflanzten Pflanze, wobei die Manschette (50, 60) einen von der Öffnung (51,64) sich radial nach aussen durch die Abdeckfläche hindurch erstreckenden Spalt (52) für das Einfahren des Stammes in die Öffnung (51,54) aufweist.

11. Manschette nach Anspruch 10, wobei die Wärmeleitfähigkeit λ der Abdeckfläche < 0,04 W/mK, bevorzugt < 0,04 W/mK ist.

12. Manschette nach Anspruch 10, wobei die Abdeckfläche eine schwarze Oberfläche aufweist.

13. Manschette nach Anspruch 10, wobei sie eine Schicht aus einem geschäumten Kunststoff und/oder Gummi aufweist.

14. Manschette nach Anspruch 10, wobei die Abdeckfläche zweigeteilt ausgebildet ist, wobei beide Teile (61,62) durch ein Scharnier (63) gegeneinander verschwenkbar mit einander verbunden sind.

15. Manschette nach Anspruch 10, wobei die Abdeckfläche einen Trägerkörper und eine wärmeisolierende Schicht aufweist.
